# EUROPEAN PATENT APPLICATION

(11) **EP 3 614 185 A1**
(43) Date of publication of application: **26.02.2020**
(21) Application number: 18190820.3
(22) Date of filing: 24.08.2018
(51) Int. Cl.: G02B 6/42, G02B 6/44, H01H 33/02

(54) **FIBER-OPTIC CABLE FEEDTHROUGH AND METHOD FOR MANUFACTURING THE SAME**

(71) Applicant: ABB Schweiz AG, 5400 Baden (CH)
(72) Inventor: Müller, Georg, 8152 Glattpark (CH); Yang, Lin, 6312 Steinhausen (CH); Frank, Andreas, 8046 Zürich (CH); Bohnert, Klaus, 5452 Oberrohrdorf (CH)
(74) Representative: ABB Patent Attorneys

(57) **Abstract**

The present invention relates to an optical fiber cable feedthrough and a method for manufacturing the same. The optical fiber cable feedthrough comprises a conduit 120 and a thermoplastic sleeve 130 that tightly encloses a portion 122 of the conduit and at least parts of an optical fiber cable section 110. An electrical insulator column, an optical current transducer, a high-voltage breaker, or a gas-insulated switchgear compartment may comprise such an optical fiber cable feedthrough.

## Description

### FIELD OF THE INVENTION

The present invention relates to the field of optical fiber cables and optical fiber feedthroughs, in particular for transmission of information and/or optical energy in high-voltage applications.

### BACKGROUND OF THE INVENTION

In several applications, optical fibers are guided into and/or out of closed compartments. The compartments may be filled with a gas or a fluid under pressure, or they may be under vacuum. In particular, such compartments could be part of high-voltage, HV, equipment, such as an insulator column or pole, gas-insulated switchgear, GIS, or an oil-filled transformer. The optical fibers may be used for optical energy transmission or communication or may be part of a fiber-optical sensor. Examples are optical sensors for temperature or chemical species inside the oil volume of a high voltage power transformer and fiber-optic current and voltage sensors in HV circuit breakers or gas-insulated switchgear. Typically, the electronics module of the sensors that may include a light source, photodetectors, and signal processing electronics is located at some distance from the closed compartment. Such applications require a gas-tight fiber feedthrough from the outside into the interior of the compartment. The fiber or fibers between the electronics module and the sensor may be protected in a robust cable.

Fiber feedthroughs are described in prior art: US 7,027,705 discloses a feedthrough wherein a bare fiber passes through a bore at the end of a metallic sleeve. The bore extends into a cone within which the fiber is sealed by means of a solder. US 5,155,795 discloses a feedthrough with a metal coated fiber that is sealed within a two-piece metal ferrule. US 6,455,868 describes a fiber sealed in a tubular member by means of an epoxy, and US 8,215,850 B2 discloses a seal wherein the fiber is sealed in a molded ceramic or glass ferrule.

These prior art solutions have in common that the sealing is done on the bare or coated fiber. In many applications the fibers to and from the feedthrough must be protected in robust fiber cables. In case of the fiber feedthroughs of prior art, there are two separate cable sections before and after the feedthrough, respectively. The fibers at the cable ends must be exposed from the cables and joined with the feedthrough fibers by means of splices or connectors. Subsequently, the cable ends must be furnished with strain relief, and the bare fibers, splices or connectors must be securely packaged. Alternatively, the feedthrough may be realized on the fibers of one of the two cables immediately at the cable end so that splicing or connectors are required only on one side of the feedthrough. Still, the fiber feedthrough interrupts the optical fiber cable.

### DESCRIPTION OF THE INVENTION

It is an objective of the present invention to provide an optical fiber cable feedthrough that, in contrast to prior art fiber feedthroughs in which individual fibers in the optical fiber cable are sealed, provides a tight sealing between the cable and the feedthrough and hence enables uninterrupted optical fiber cable sections across the feedthrough. In contrast to mechanical glands used for electrical cables, the optical fiber cable feedthrough shall only exert moderate mechanical force onto the cable so that the optical properties of the optical fiber cable are not deteriorated, which is of particular importance in case of polarization maintaining fibers in the optical fiber cable. It is another objective of the present invention to provide a method to manufacture an optical fiber cable feedthrough. The method shall be executable in the field, e.g., in a high-voltage substation, and enable a simplified installation of optical fiber cables in high-voltage equipment. Further objectives are to provide an electrical insulator column, an optical fiber high-voltage link, a flexible AC transmission system, FACTS, a high-voltage DC, HVDC, system, an optical current transducer, a high-voltage breaker, or a GIS compartment comprising one or more feedthroughs according to the present invention, wherein leakage through the interior of the optical fiber cable is prevented. Furthermore, the manufacturing of the optical fiber feedthrough and accompanying installation efforts shall be substantially reduced compared to fiber feedthroughs of prior art.

These objectives are achieved by the subject-matter of the independent claims. Further exemplary embodiments are evident from the dependent claims, claim combinations and the following description, also in conjunction with the drawings.

A first aspect of the present invention relates to a method for manufacturing an optical fiber cable feedthrough. The method comprises the method elements of:
- feeding an optical fiber cable section through a conduit, the conduit having a first portion at a first end of the conduit, wherein the optical fiber cable section may have an outer diameter smaller than or essentially the same as a minimum inner diameter of the conduit;
- feeding the optical fiber cable section through a shrink sleeve, in particular, a dual wall shrink sleeve, that is at least partially in an expanded or unshrunk state, in particular in a first expanded state, wherein the shrink sleeve may have an outer wall of a thermoplastic material, an inner wall of a hot-melt adhesive and/or a minimum recoverable inner diameter smaller than the outer diameter of the optical fiber cable section;
- putting a first portion of the shrink sleeve at least partially in the expanded or unshrunk state over the first portion of the conduit such that a second portion of the shrink sleeve extends in a longitudinal direction beyond or protrudes from the conduit for enclosing a first portion of the cable section; and
- heating at least a part of the shrink sleeve, in particular the whole shrink sleeve (130), to or above a first recovery temperature such that a recovered state of at least the part of the shrink sleeve, in particular the whole shrink sleeve (130), is achieved, in particular thereby tightly or gas-tightly enclosing the first portion of the conduit and the first portion of the cable section.

In an exemplary embodiment, the first portion of the shrink sleeve and the second portion of the shrink sleeve may be heated together to or above the first recovery temperature. Alternatively, the first portion of the shrink sleeve or the second portion of the shrink sleeve may be heated to or above the first recovery temperature after each other; in particular, the first portion of the shrink sleeve may be heated to or above the first recovery temperature before feeding the optical fiber cable section through the shrink sleeve, or the second portion of the shrink sleeve may be heated to or above the first recovery temperature before putting the first portion of the shrink sleeve in the expanded or unshrunk state over the first portion of the conduit.

In an exemplary embodiment, the method of the first aspect of the present invention may further comprise the method elements of:
- putting a protective shrink sleeve section in an expanded or unshrunk state, in particular in a second expanded state, over at least parts of the shrink sleeve and/or a portion of the optical fiber cable section adjacent to the shrink sleeve, or over a second end of the conduit and/or a portion of the optical fiber cable section adjacent to the second end of the conduit; and
- heating at least a part of the protective shrink sleeve section to or above a second recovery temperature such that a recovered state of at least the part of the protective shrink sleeve, in particular, tightly or gas-tightly enclosing the shrink sleeve and/or the portion of the optical fiber cable section adjacent to the shrink sleeve or the second end of the conduit and/or the portion of the optical fiber cable section adjacent to the second end of the conduit, is achieved, wherein the protective shrink sleeve section may have an outer wall of a thermoplastic material, in particular, of high chemical resistance, e.g. PVDF, PEEK, or PTFE, and/or a minimum recoverable inner diameter smaller than the outer diameter of the optical fiber cable section.

A second aspect of the invention relates to an optical fiber cable feedthrough, in particular manufactured according to the method of the first aspect. The optical fiber cable feedthrough comprises a conduit, having a first portion at a first end of the conduit, an optical fiber cable section that is fed through the conduit and may have an outer diameter smaller than or essentially the same as a minimum inner diameter of the conduit, and a thermoplastic sleeve that may have an inner surface lined with a hot-melt adhesive and may be at least in parts in a recovered state, which may be achieved by heat, wherein a first portion of the thermoplastic sleeve tightly or gas-tightly encloses the first portion of the conduit and a second portion of the thermoplastic sleeve tightly encloses a first portion of the optical fiber cable section adjacent to the first portion of the conduit.

In an exemplary embodiment, the optical fiber cable feedthrough of the first aspect of the present invention may comprise a protective thermoplastic sleeve section tightly, in particular gas-tightly, enclosing at least parts of the shrink sleeve and/or a portion of the optical fiber cable section adjacent to the shrink sleeve, or a second end of the conduit and/or a portion of the optical fiber cable section adjacent to the second end of the conduit, wherein the protective shrink sleeve section may have an outer wall of a thermoplastic material of high chemical resistance, e.g. PVDF, PEEK, or PTFE; the protective thermoplastic sleeve section may further be at least in parts in a recovered state, which may be achieved by heat.

A third aspect of the present invention relates to an electrical insulator column which comprises an insulation volume, which may be an insulation gas volume, comprising, e.g., N₂, SF₆, CO₂, or mixtures thereof, or filled with oil or a gel. The electrical insulator column comprises at a first position, in particular, at a first end or at a position at ground potential, a first optical fiber cable feedthrough according to the second aspect of the present invention and/or manufactured according to the first aspect of the present invention, wherein the optical fiber cable feedthrough may be arranged such that the optical fiber cable section of the first optical fiber cable feedthrough is guided into the insulation volume at the first position.

In an exemplary embodiment of the third aspect of the present invention, the electrical insulator column comprises at a second position, in particular, at a second end or a high-voltage end, a second optical fiber cable feedthrough, in particular according to the second aspect of the present invention and/or manufactured according to the first aspect of the present invention, which may be arranged such that the optical fiber cable section of the second optical fiber cable feedthrough is guided out of the insulation volume at the second position, wherein the optical fiber cable section of the first optical fiber cable feedthrough and the optical fiber cable section of the second optical fiber cable feedthrough may be part of one optical fiber cable. In this exemplary embodiment, leakage from the insulation volume through the interior of the optical fiber cable is prevented.

Alternatively, in another exemplary embodiment of the third aspect of the present invention, the electrical insulator column comprises a housing, in particular, a gas-tight housing, which may be arranged inside the insulation volume at a high-voltage end of the insulator column or close to the high-voltage end of the insulator column, e.g., in a distance of less than 1 m. The housing has a second optical fiber cable feedthrough, in particular according to the second aspect of the present invention and/or manufactured according to the first aspect of the present invention, arranged such that the optical fiber cable section of the second optical fiber cable feedthrough is fed from the insulation volume into the housing, wherein the optical fiber cable section of the first optical fiber cable feedthrough and the optical fiber cable section of the second optical fiber cable feedthrough may be part of one optical fiber cable. In this exemplary embodiment, leakage from the insulation volume through the interior of the optical fiber cable is prevented.

In both alternative exemplary embodiments of the third aspect of the present invention, the optical fiber cable may be protected by a protective layer, in particular, at least partially by the protective thermoplastic sleeve section of the first optical fiber cable feedthrough, according to embodiments of the second aspect of the present invention and/or manufactured according to embodiments of the first aspect of the present invention, and/or the protective thermoplastic sleeve section of the second optical fiber cable feedthrough, according to embodiments of the second aspect of the present invention and/or manufactured according to embodiments of the first aspect of the present invention. The protective layer may have an outer wall of a thermoplastic material, in particular, of high chemical resistance, e.g., PVDF, PEEK, or PTFE and may protect the optical fiber cable against reactive decomposition products in the insulation volume that may result from electrical arcing, such as SF₆ decomposition products.

A fourth aspect of the present invention relates to an optical fiber high voltage link for information transfer, in particular, digital or analogue information, e.g., encoded in phase shifts of light waves traveling through one or more fibers or modulation of the light power, and/or optical energy transmission, comprising an insulator column of the third aspect of the present invention.

A fifth aspect of the present invention relates to a flexible AC transmission system, FACTS, or a high voltage DC, HVDC, system comprising an optical fiber high voltage link according to the fourth aspect of the present invention.

A sixth aspect of the present invention relates to an optical current transducer, comprising an insulator column according to a third aspect of the present invention.

In an exemplary embodiment of the sixth aspect of the present invention, the optical current transducer may further comprise a primary optical current converter connected outside the insulation volume to an end of the optical fiber cable adjacent to a second optical fiber cable feedthrough, in particular at a high-voltage end or a second end.

Alternatively, as another exemplary embodiment of the sixth aspect of the present invention, the optical current transducer may further comprise an aperture for receiving a current conductor, carrying a current to-be-measured, or current terminals connectable to at least two current conductors, carrying the current to-be-measured, and a primary optical current converter arranged in a housing inside the insulation volume, connected to an end of an optical fiber cable, and adapted for measuring the current to-be-measured.

A seventh aspect of the present invention relates to a high-voltage circuit breaker, in particular, a high-voltage live tank breaker, comprising an insulator column according to embodiments of the third aspect of the present invention and a sensor, such as a temperature sensor or a current sensor, connected to an end of an optical fiber cable adjacent to a second optical fiber cable feedthrough.

An eight aspect of the present invention relates to gas-insulated switchgear, GIS, compartment which comprises an insulation volume, in particular, an insulation gas-volume, which may be filled with SF₆, CO₂, N₂, or a mixture thereof, or with alternative gases such as fluoroketones or fluoronitriles, and a first optical fiber cable feedthrough, according to the second aspect of the present invention and/or manufactured according to the first aspect of the present invention, arranged such that the optical fiber cable section of the first optical fiber cable feedthrough is guided into the insulation volume. The GIS compartment may be part of a 3-phase encapsulated GIS.

In an exemplary embodiment of the eighth aspect, the GIS compartment may further comprise a housing inside the insulation volume. The housing may have a second optical fiber cable feedthrough, according to the second aspect of the present invention and/or manufactured according to the first aspect of the present invention, which is arranged such that the optical fiber cable section of the second optical fiber cable feedthrough is fed from the insulation volume into the housing, wherein the optical fiber cable section of the first optical fiber cable feedthrough and the optical fiber cable section of the second optical fiber cable feedthrough are part of one optical fiber cable. In this exemplary embodiment, leakage through the interior of the optical fiber cable is prevented. The housing may comprise a temperature sensor, a pressure sensor, a voltage sensor, a current sensor, and/or a gas analyzer. In case of 3-phase encapsulated GIS, the optical current and/or voltage sensor may be attached to one of the three phases.

These and other aspects of the present invention will be apparent from and elucidated with reference to the embodiments described hereinafter.

### BRIEF DESCRIPTION OF THE DRAWINGS

The subject-matter of the present invention will be explained in more detail in the following text with reference to exemplary embodiments which are illustrated in the attached drawings.
Fig. 1 schematically illustrates by way of example a cross-sectional view of a cable and a shrink sleeve during a step in a method according to a first aspect of the present invention.
Fig. 2 schematically illustrates by way of example a cross-sectional view of a cable and a shrink sleeve during a step in a method according to a first aspect of the present invention.
Fig. 3 schematically illustrates an exemplary optical fiber feedthrough according to a second aspect of the invention or manufactured according to a first aspect of the invention.
Fig. 4 schematically illustrates an embodiment according to a third aspect of the present invention.
Fig. 5 schematically illustrates an embodiment according to a third aspect of the present invention.
Fig. 6 schematically illustrates a method step according to embodiments of a first aspect of the present invention.
Fig. 7 schematically illustrates an embodiment according to a third aspect of the present invention.
Fig. 8 schematically illustrates an embodiment according to a sixth aspect of the present invention.
Fig. 9 schematically illustrates an embodiment according to a sixth aspect of the present invention.
Fig. 10 schematically illustrates an embodiment according to a seventh aspect of the present invention.
Fig. 11 schematically illustrates an embodiment according to an eighth aspect of the present invention.

The reference symbols used in the drawings, and their meanings, are listed in summary form in the list of reference symbols. In principle, identical or corresponding parts are provided with the same reference symbols in the figures.

### DETAILED DESCRIPTION OF EXEMPLARY EMBODIMENTS

The present invention will be described in more detail with reference to the drawings, in which exemplary embodiments are shown.

In the following, the method for manufacturing an optical fiber cable feedthrough 100 according to a first aspect of the present invention and the optical fiber cable feedthrough 100 according to a second aspect are described in more detail.

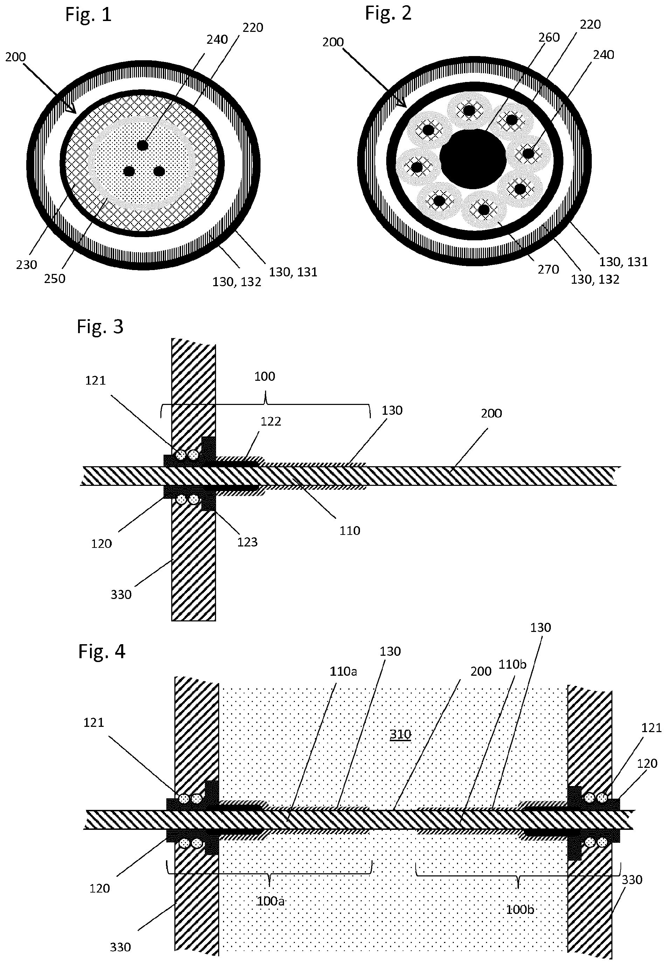

By way of example, Fig. 1 and Fig. 2 schematically illustrate a cross-sectional view of the optical fiber cable section 110, which may be part of an optical fiber cable 200, and the shrink sleeve or thermoplastic sleeve 130 during a step or method element in the method for manufacturing an optical fiber cable feedthrough 100. At this step, the optical fiber cable section is fed through the conduit 120, not shown in Figs. 1 and 2, and through the shrink sleeve 130 while the shrink sleeve 130 is in an expanded or unshrunk state. The shrink sleeve 130 may be commercially available dual wall heat shrink tubing that may comprise an outer wall 131 of thermoplastic material such as a cross-linked polyolefin tube and an inner wall 132 of a hot-melt or thermoplastic adhesive. In the unshrunk or expanded state, the shrink sleeve is expanded in diameter; heating to or above a recovery or shrink temperature shrinks the outer wall over the inserted parts to an minimum recoverable diameter while the adhesive forms a tight encapsulation. The minimum recoverable diameter is chosen to be smaller than a diameter of the optical fiber cable section 110 and/or the optical fiber cable 200. Common shrink or recovery temperatures may be between 100°C and 120°C. Operating temperature ranges may be from -55°C to 130°C depending on material details. Other types of commercial dual wall heat shrink tubing have an outer wall/inner wall of polytetrafluoroethylene/fluorinated ethylene propylene, PTFE/FEP, but may require considerably higher shrink temperatures. In further alternative embodiments, a shrink sleeve 130 comprising only a single wall, e.g., of a thermoplastic material, may be used.

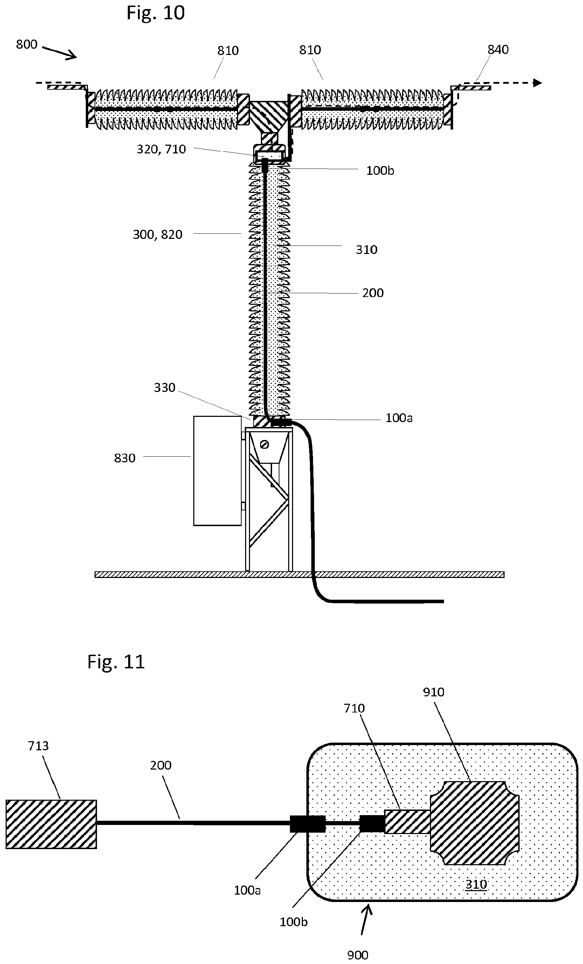

The optical fiber cable 200 may be a so-called loose tube cable as shown in Fig. 1. Here, the individual fibers 240 are contained in an often gel-filled inner loose tube 250 made from a plastic material. The loose tube 250 is surrounded by strain relief matter 230, e.g., a glass fiber armor that also acts as rodent protection. An outer jacket 220, often from polyvinylchlorid (PVC), completes the cable structure. Alternatively, the cable 200 may be a different kind of cable such as a tight-buffer cable or a break-out cable as shown in Fig. 2. In the latter case, the fibers 240 are contained in a number of sub-cables 270 arranged around a central strength member 260. A common outer jacket 220 again protects and holds the assembly together. Typical outer optical fiber cable diameters may be from 3 mm to 60 mm, in particular from 6 mm to 15 mm for cables according to Fig. 1 and 10 mm to 20 mm for cables according to Fig. 2. The fibers 240 in the optical fiber cable 200 may be any kind of optical fiber in particular single mode optical fiber, multi mode optical fiber, or polarization maintaining fiber. The fibers 240 can be of different materials such as fused silica with polymer coating, such as acrylate or silicone, or even carbon or metallic coating. The fibers 240 may also be of polymer optical fiber, POF. The invention may also apply to fibers that are protected not by a cable as shown in Figures 1 and 2 but by a buffer coating, i.e., an additional coating in addition to the primary fiber coating. A typical outer diameter of a buffer coating is 0.9 mm.

The feedthrough-body or conduit 120 may be of tubular shape, as illustrated by way of example in Fig. 3. The conduit 120 may be made from metal such as aluminum or stainless steel and has a cylindrical bore with a minimum inner diameter larger, but close to the outer diameter of the optical fiber cable section 110; in particular, the diameter difference may be smaller than 1.0 mm. The conduit 120 may comprise a first portion at a first end of the conduit, e.g., formed as a conduit nozzle 122, e.g., of a length of 5 mm to 150 mm. A part or a first portion of the shrink sleeve or thermoplastic sleeve 130 is put over at least parts of the first portion of the conduit 120 or conduit nozzle 122 such that a second portion of the shrink sleeve or thermoplastic sleeve 130, e.g., by a length of 5 mm to 150 mm, extends in a longitudinal direction, defined by the optical fiber cable section 110 or the cable 200, beyond the conduit 120 and encloses the optical fiber cable section 110.

Heating the shrink sleeve 130 to or above its recovery or shrink temperature leads to a recovered state of the shrink sleeve 130, i.e., the shrink sleeve shrinks in diameter potentially down to a minimum recoverable diameter and tightly encloses all enclosed parts exceeding this minimum recoverable diameter, i.e., the enclosed portion of the optical fiber cable section 110 and the conduit nozzle 122 and/or the first portion of the conduit 120. This way, the shrink sleeve or thermoplastic sleeve 130 in the recovered state seals the optical fiber cable section 110 against the conduit 120 and prevents gas leakage through the remaining clearances between the optical fiber cable section 110 and the inner nozzle surface.

The conduit 120 may further comprise a conduit flange 123, as shown in Fig. 3, which fits into a corresponding recess or hole in a compartment wall 330 of a compartment into which the optical fiber cable section 110 is to be fed. This, in particular gas-tight fixation, may be achieved by one or more o-rings 121 that may seal the space between the conduit flange 123 and the compartment wall 330 and tighten the conduit flange 123 in the compartment wall 330. There may be further provisions to fasten or seal the conduit 120 to or against the compartment wall 330: E.g., the conduit flange 123 may comprise an outer thread, in particular a conical or tapered thread, adapted to be screwed into a threaded hole of the compartment wall 330. Further additional or alternative means for fixation of the conduit 120 to the compartment wall 330 may include typical means for sealing and fixation of flanges such as screws, rivets, sealants, solder, and/or adhesives such as epoxy. The compartment wall 330 may itself be a flange such as a flange of GIS compartment 900 or a flange at an end of an electrical insulator column 400. In embodiments, the conduit 120 may be an integral part of the compartment wall 330 or is welded to the compartment wall 330; in this case, the conduit 120 or conduit flange 123 may itself be formed as a flange of GIS compartment 900 or as a flange of a high voltage insulator column 400.

In embodiments, the conduit 120 may comprise a second portion at a second end, in particular with respect to the longitudinal direction of the conduit 120, defined by the extension of the optical fiber cable section 110, and the optical fiber cable feedthrough 100 may comprise an additional shrink sleeve or additional thermoplastic sleeve, enclosing at least parts of the second portion of the conduit and a portion of the optical fiber cable section 110 adjacent to the second portion of the conduit 120. The second portion of the conduit and the additional shrink sleeve or additional thermoplastic sleeve may be formed in the same or a similar way as the first portion of the conduit 120 and the shrink sleeve or thermoplastic sleeve 130, as described further above, and may be equivalently manufactured. When fixated into a compartment wall 330, the additional shrink sleeve or second thermoplastic sleeve and the second portion of the conduit 120 may extend on the other side of the compartment wall than the first portion of the conduit 120 and the shrink sleeve or thermoplastic sleeve 130; this may act as strain relief and/or additional sealing. When e.g. used as strain relief, the conduit 120 may comprise between first portion and section portion a hole such that the space between the shrink or thermoplastic sleeve 130 and the additional shrink or thermoplastic sleeve can communicate with a surrounding volume, in particular, for pressure equalization.

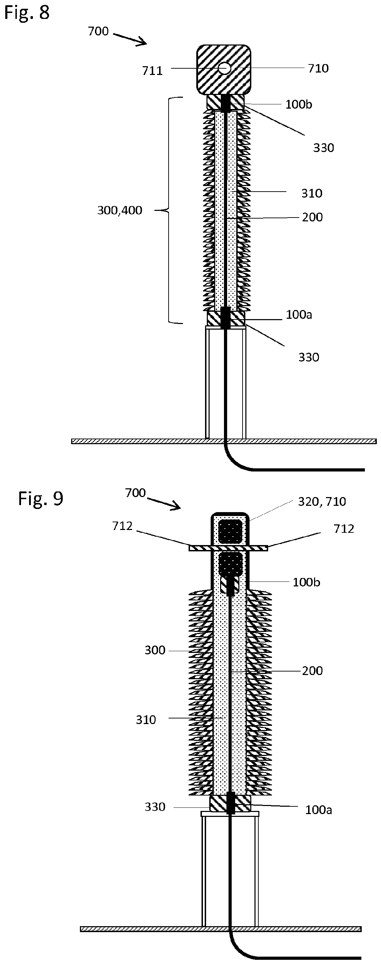

By way of example, Fig. 4. schematically illustrates a first optical fiber feedthrough 100a and a second optical fiber feedthrough 100b, fixated in recesses or holes of a compartment wall 330 of a compartment with an insulation volume 310 which may be filled with an insulation gas such dry air, SF₆, NO₂, CO₂, or mixtures thereof or with an insulating fluid such as an oil or a gel. The insulation volume may electrically insulate a high voltage potential from a ground potential or one or more electrical parts within the compartment 300, e.g., from the compartment wall 330 or from each other and prevent flashovers. The two feedthroughs 100a, 100b are likewise formed and/or manufactured, e.g., as described above; their respective optical fiber cable section 110a and 110b are part of the same optical fiber cable 200. This way the optical fiber cable 200 is fed into and out of the compartment. Leakage through the interior of the optical fiber cable 200 is prevented since the ends of the optical fiber cable are located outside the insulation volume. Such an arrangement of first and second optical fiber cable feedthrough 100a and 100b; may be e.g. used for guiding the optical fiber cable 200 through an electrical insulator column; in this case, the parts of the compartment wall 330 shown in Fig. 4 may be flanges at the two ends of the electrical insulator column and the column, typically with sheds, itself is not shown in Fig. 4; see description in context of Fig. 8. In the illustrative example of Fig. 4, the first portion of the conduit 120 and the optical fiber cable section 130 of both feedthroughs 100a and 100b extend into the insulation volume. Alternatively, one of or both the feedthroughs may be formed such that first portion of the conduit 120 and the optical fiber cable section 130 extends on the other side of the compartment wall 330.

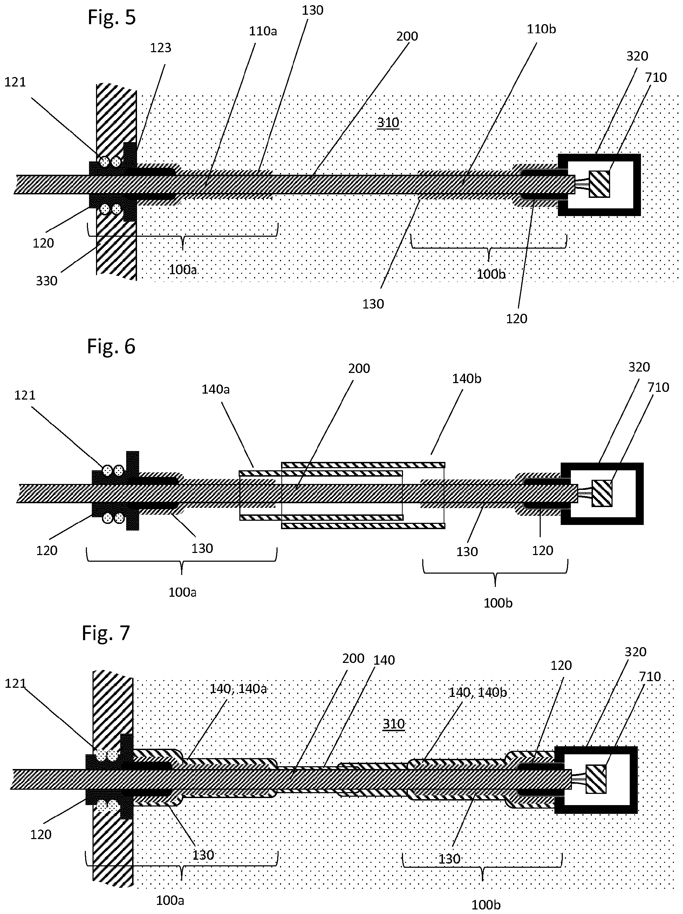

Fig. 5 schematically illustrates an alternative arrangement of first optical fiber cable feedthrough 100a and second optical fiber cable feedthrough 100b. The first optical fiber cable feedthrough 100a is fixated in the recess or hole of a compartment wall 330 in the same or a similar way as described in the context of the embodiment illustrated in Fig.4. The second optical fiber cable feedthrough 100b may be part of a sub-compartment or housing 320, which resides in the insulation volume 310 and may be gas-tight. The insulation volume 310 may be filled with an insulation gas such dry air, SF₆, NO₂, CO₂, or mixtures thereof or with an insulating fluid, such as an oil or a gel, and may electrically insulate a high voltage potential from a ground potential or one or more electrical parts within the compartment 300, e.g., from the compartment wall 330 or from each other and may prevent flashovers. Like the compartment 300, the sub-compartment or housing 320 may be filled with a gas or an insulation gas such as dry air, NO₂, SF₆, CO₂, or a mixture thereof, or a fluid such as an oil or a gel; the pressure may be around atmospheric pressure. In the exemplary embodiment in Fig. 5, the conduit 120 of the second optical fiber cable feedthrough 100b is reduced to a nozzle which may be welded to the sub-compartment or housing 320; the latter may comprise a sensor 710. Alternatively, the conduit 120 of the second optical fiber cable feedthrough 100b may have a design similar to the conduit 120 of the first optical fiber cable feedthrough 100a. Instead of welding, the feedthrough may be an integral part of the housing 320 or attached to it by other gas-tight means, such as adhesives or a gas-tight thread. The shrink sleeve or thermoplastic sleeve 130 tightens again the second optical fiber cable section 110b against the conduit 120 of the second optical fiber cable feedthrough 100b. Accordingly, leakage through the feedthroughs and the interior of the optical fiber cable into or out of the insulation volume 310 from or to the outside volume is prevented. Advantageously, this way gas-tight sealing of the individual fibers of the optical fiber cable 200 can be avoided.

The sub-compartment or housing 320 may comprise, as mentioned, a sensor 710, in particular a sensor head or a primary converter such as a primary optical converter head. The optical fiber cable 200 may continue from the compartment 300 at the first optical fiber cable feedthrough 100a all the way to an opto-electronics module or secondary converter of the sensor. There, the individual fibers may be connected by fiber splices or fiber connectors to the fiber pigtails of the light source and photo detectors or other sensor-specific fiber components. Particularly in case of longer distances between the compartment and the location of the opto-electronics the optical fiber cable 200 leaving the compartment 300 may be terminated in a splice or connector box close the compartment and bridge the further distance to the opto-electronics unit or secondary converter with a separate cable in order to facilitate the installation procedures.

The fiber cable 200 with the attached first feedthrough 100a, second feedthrough 100b, and housing 320 may be fed through the hole or recess in the compartment wall 330 from the inside of the compartment 300 to the outside of the compartment. Therefore, the compartment 300 may have another opening through which the optical fiber cable 200 with the attached first feedthrough 100a, second feedthrough 100b, and housing 320 are inserted. Alternatively, the optical fiber cable 200 with the attached first feedthrough 100a, second feedthrough 100b, and housing 320 body may be fed through the hole or recess in the compartment wall 330 from the outside into the compartment 300; to this end, the first feedthrough 100a may have larger lateral extension than second feedthrough 100b or housing 320, in this embodiment, the conduit flange 123 may face to the outside of the compartment 300 alternatively to what is depicted in Fig. 5.

Electrical arcing that may occur in the insulation volume 310, e.g., resulting from operation of a breaker inside in the compartment 300, may lead to one or more decomposition products of the insulation gas or insulating fluid that are chemically aggressive. E.g., in the case of SF₆ as insulation gas SF₄ and, in the presence of humidity, HF may be produced. In order to protect parts of the fiber optic cable 200 in the insulation volume 310 against such decomposition products the fiber optic cable 200 and/or the fiber optic cable sections 110, 110a, and 110b may have a protective layer such as an inner tubing, a protective layer, or a jacket from a chemically inert material such as PVDF or PTFE. This jacket may be provided as one or more protective shrink sleeve sections or one or more protective thermoplastic sleeve sections 140, 140a, 140b from a chemically inert and thermoplastic material such as PVDF or PTFE, which have a minimum recoverable inner diameter smaller or essentially the same as the optical fiber cable 200 and/or the first and the second optical fiber cable section 110a, 110b. The protective thermoplastic or shrink sleeve sections 140, 140a, 140b may be pulled over the optical fiber cable 200 before the second optical fiber cable feedthrough 100b is added. As schematically illustrated in Fig. 6, in order to enable access for shrinking the shrink sleeve section 110b, two protective shrink or thermoplastic sleeve sections 140a, 140b with different outer diameter may be employed so that the sleeve with the smaller diameter 140a can be stored in the sleeve with the larger diameter 140b while the shrink or thermoplastic sleeve 130 is shrunk, e.g., on the conduit 120 of the second feedthrough 100b. Subsequently the protective shrink or thermoplastic sleeves sections 140a, 140b are pulled apart and shrunk over the whole cable length between the two optical fiber cable feedthroughs 100a, 100b, in particular including the first portion of each of the two feedthroughs 100a, 100b. The total length of the two or more protective shrink or thermoplastic sleeve sections is somewhat longer than the length of the optical fiber cable 200 between first and second optical fiber cable feedthrough 110a, 110b in order to get some overlap of the protective shrink or thermoplastic sleeve sections. Fig. 7 schematically illustrates an accordingly prepared assembly with a protective thermoplastic sleeve section 140, comprising two sections 140a and 140b. Alternatively, a first protective shrink or thermoplastic sleeve section may be shrunk over at least parts of the shrink sleeve or thermoplastic sleeve 130 of, e.g., the first optical fiber cable feedthrough 100a and at least parts of the optical fiber cable 200 before the second optical fiber cable feedthrough 100b and its corresponding shrink or thermoplastic sleeve section is added; a second protective shrink or thermoplastic sleeve section may be stored over the already shrunk first protective shrink or thermoplastic sleeve section while the shrink sleeve or protective sleeve is shrunk 130 on the second optical fiber cable feedthrough 100b. This way, both protective shrink or thermoplastic sleeve sections may have the same diameter in an expanded or unshrunk state. As a further alternative, when the protective thermoplastic or shrink sleeve sections 140, 140a, 140b have in an unshrunk or expanded state an inner diameter that exceeds the outer diameter of the conduit 120 of the first 100a and/or the second optical fiber cable feedthrough 110b, the protective thermoplastic or shrink sleeve sections 140 can be pulled over the first optical fiber cable feedthrough 100a and/or the second optical fiber cable feedthrough 110b after shrinking of the shrink sleeve 130 of the first optical fiber cable feedthrough 100a and the second optical fiber cable feedthrough 110b and subsequently shrunk onto the optical fiber cable 200.

Fig. 8 schematically illustrates an optical current transducer 700 comprising an electrical insulator column 300 according to aspects of the present invention. The electrical insulator column comprises at flanges 330 a first and a second optical fiber feedthrough 100a, 100b as described above and an optical fiber cable 200 is guided from ground potential to high voltage potential. At a high-voltage end of the electrical insulator column 330, a primary optical current converter 710 is arranged on top of the electrical insulator column. The optical fiber cable 200 connects the primary optical current converter 710 with an opto-electronics module or secondary converter 713 that is not shown in Fig. 8. The opto-electronics module or secondary converter 713 may comprise a light source and one or more photodetectors. Light-waves may be sent through the optical fiber cable 200 from the secondary converter 713 to the primary optical current converter 710. In the primary optical current converter 710, a signal representative of the current to-be-measured may be encoded in a phase shift of light waves or a modulation of a light power. The primary optical current converter 710 may, e.g., be a fiber-optic current sensor and employ the Faraday effect in a coil of fiber around a conductor carrying the current to-be-measured, e.g., as described in K. Bohnert et al. "Temperature and vibration insensitive fiber-optic current sensor," J. Lightw. Technol., vol. 20, no. 2, pp 267-276, Feb. 2002. As illustrated in Fig. 8, the optical current transducer may comprise an aperture for receiving a current conductor, carrying a current to-be-measured; alternatively, the optical current transducer 700 may comprise current terminals connectable to at least two current conductors, carrying the current to-be-measured.

In the embodiment of an aspect of the present invention, schematically illustrated in Fig. 8, the electrical insulator column 300 is part of an optical fiber high voltage link 400 for transfer of information, e.g., a signal representative of the current to-be-measured in this case. The transferred information can be also be encoded in a wavelength shift, e.g., in case of a temperature sensor. In other cases, an optical fiber high voltage link 400 could be used to transfer digital information such as control signals or transmission of energy, particular as power supply for auxiliary or secondary equipment on high voltage. The optical fiber high voltage link 400 according to the present invention can be in particular used in a flexible AC transmission system, FACTS or a high voltage DC, HVDC, system.

Fig. 9 schematically illustrates an alternative embodiment of an optical current transducer 700 comprising an electrical insulator column 300 according to aspects of the present invention. Here, the primary optical current converter 710, such as a fiber optical current sensor, is located in a, in particular, gas-tight housing 320, which itself resides in the insulation volume 310 of the electrical insulator column 300. The electrical insulator column comprises at a flange 330 at ground potential a first optical fiber feedthrough 100a. The optical fiber cable 200 is guided from ground potential through the insulation volume 310 of the insulator column to the housing 320 at high-voltage potential. At a second optical fiber cable feedthrough 100b, the optical fiber cable is guided or fed into the housing 320 as described above and an optical fiber cable is guided from ground potential to high voltage potential. As in the exemplary embodiment above, at the primary optical current converter 710, a signal representative of the current to-be-measured may be encoded in a phase shift of light waves or a modulation of a light power. As schematically depicted in Fig. 9, the optical current transducer 700 may comprise current terminals 712 connectable to at least two current conductors, carrying the current to-be-measured; alternatively, the optical current transducer 700 may comprise an aperture for receiving a current conductor, carrying a current to-be-measured.

Fig. 10 schematically illustrates, by way of example, a high-voltage live tank breaker 800 with an integrated primary optical current converter 710, such as a fiber optical current sensor. The illustrated circuit breaker comprises two serial breaker chambers 810 on high voltage supported by a breaker pole 820. The breaker pole 820 is or comprises an electrical insulator column 300 according to aspects of the present invention and a breaker drive rod, which is not shown in Fig. 10 and transmits the mechanical action of the breaker drive 830 at the bottom of the breaker 800 to the switches in the breaker chambers 810. The breaker chambers 810 and pole 820 share a common insulation volume 310 of electrically insulating, pressurized SF6 gas. The dashed line indicates the current path 840 through the breaker; more details of such a breaker are described in US 6,608,481 B1 and/or WO2008/080878A1. In this exemplary embodiment of an aspect of the present invention, the primary optical current converter 710 resides in a, in particular gas-tight, housing 320, which is located in the insulation volume at the high-voltage end of the breaker pole, and may be connected to a secondary converter or an opto-electronics module by means of an optical fiber cable 200. The optical fiber cable 200 is guided into the breaker pole 820 by means of a first optical fiber cable feedthrough 100a at a bottom flange 330 of the breaker pole 820 at ground potential. The housing 320 comprises a second optical fiber cable feedthrough 100b to guide the optical fiber cable 200 into the housing 320. Alternatively, the primary optical current converter may reside outside the insulation volume 310; in this case the second optical fiber cable feedthrough feeds the optical fiber cable out of the breaker pole at a high voltage end. Alternatively, instead of or in addition to a primary optical current converter 710, other kinds of sensors can be present, e.g., a fiber optic temperature sensor or a fiber-optic pressure sensor.

Fig. 11 schematically illustrates an exemplary embodiment of an aspect of the present invention: An optical fiber cable 200 is fed into the GIS compartment 900 at a first optical fiber cable feedthrough 100a. The optical fiber cable 200 may be connected to a sensor 710, e.g., residing in a, in particular gas-tight housing, by means of a second optical fiber cable feedthrough 100b. An opto-electronics module 713 may be located outside the GIS compartment 900 and may be used for readout of the sensor 710. The sensor 710 can be attached in close spatial proximity to application-specific equipment 910 in the GIS compartment such as a breaker, a disconnector, and/or a conductor. The sensor can be any kind of sensor such as a temperature sensor, a pressure sensor, a current or voltage sensor, and/or a gas density sensor.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

### LIST OF REFERENCE SYMBOLS

- 100: optical fiber cable feedthrough,
- 100a: first optical fiber cable feedthrough
- 100b: second optical fiber cable feedthrough
- 110, 110a, 110b: optical fiber cable section
- 120: conduit
- 121: o-ring
- 122: conduit nozzle
- 123: conduit flange
- 130: shrink sleeve, thermoplastic sleeve
- 131: outer wall of thermoplastic material
- 132: inner wall of hot-melt adhesive
- 140, 140a, 140b: protective thermoplastic sleeve section, protective shrink sleeve section
- 200: optical fiber cable
- 220: outer cable jacket
- 230: strain relief, rodent protection
- 240: fiber, fibers
- 250: loose tube
- 260: central strength member
- 270: sub-cable with fiber
- 300: electrical insulator column, compartment
- 310: insulation volume
- 320: housing
- 330: compartment wall, electrical insulator column flange, flange
- 400: optical fiber high voltage link
- 700: optical current transducer
- 710: primary optical current converter, sensor, sensor head
- 711: aperture
- 712: current terminal
- 713: opto-electronics module
- 800: high-voltage circuit breaker
- 810: breaker chamber
- 820: breaker pole
- 830: breaker drive
- 840: current path
- 900: gas-insulated switchgear, GIS, compartment
- 910: application-specific equipment

## Claims

1. A method for manufacturing an optical fiber cable feedthrough (100), comprising the method elements of:
feeding an optical fiber cable section (110) through a conduit (120), the conduit having a first portion at a first end of the conduit;
feeding the optical fiber cable section (110) through a shrink sleeve (130) that is at least partially in an expanded state,
putting a first portion of the shrink sleeve (130) at least partially in the expanded state over the first portion of the conduit (120) such that a second portion of the shrink sleeve (130) extends in a longitudinal direction beyond the conduit (120) for enclosing a first portion of the optical fiber cable section (110); and
heating at least a part of the shrink sleeve (130) to or above a first recovery temperature such that a recovered state of at least the part of the shrink sleeve (130) is achieved.

2. The method according to claim 1, further comprising the method elements of
putting a protective shrink sleeve section (140) in an expanded state
over at least parts of the shrink sleeve (130) and/or an portion of the optical fiber cable section (110) adjacent to the shrink sleeve (130), or
over a second end of the conduit (120) and/or an portion of the optical fiber cable section (110) adjacent to the second end of the conduit (120);
and heating at least a part of the protective shrink sleeve section (140) to or above a second recovery temperature such that a recovered state of at least the part of the protective shrink sleeve (140) is achieved.

3. An optical fiber cable feedthrough (100), in particular manufactured according to the method of any one of the claims 1 to 2, comprising
a conduit (120), having a first portion at a first end of the conduit (120),
an optical fiber cable section (110), fed through the conduit (120),
a thermoplastic sleeve (130),
wherein a first portion of the thermoplastic sleeve (130) tightly encloses the first portion of the conduit (120) and a second portion of the thermoplastic sleeve (130) tightly encloses a first portion of the optical fiber cable section (110) adjacent to the first portion of the conduit (120).

4. The optical fiber cable feedthrough (100) according to claim 3, in particular manufactured according to the method of claim 2, comprising a protective thermoplastic sleeve section (140), tightly enclosing at least parts of the shrink sleeve (130) and/or a portion of the optical fiber cable section (110) adjacent to the shrink sleeve (130), or over a second end of the conduit (120) and/or a portion of the optical fiber cable section (110) adjacent to the second end of the conduit (120).

5. An electrical insulator column (300), comprising an insulation volume (310), with, at a first position, a first optical fiber cable feedthrough (100a) according to claim 3 or 4 and/or manufactured according to claim 1 or 2,
arranged such that the optical fiber cable section (110a) of the first optical fiber cable feedthrough (100a) is guided into the insulation volume (310) at the first position.

6. The electrical insulator column (300) according to claim 5 with, at a second position, a second optical fiber cable feedthrough (100b) according to claim 3 or 4 and/or manufactured according to claim 1 or 2, which is arranged such that the optical fiber cable section (110b) of the second optical fiber cable feedthrough (100b) is guided out of the insulation volume (310) at the second position,
wherein the optical fiber cable section (110a) of the first optical fiber cable feedthrough (100a) and the optical fiber cable section (110b) of the second optical fiber cable feedthrough (110a) are part of one optical fiber cable (200).

7. The electrical insulator column (300) according to claim 5, comprising a housing (320) inside the insulation volume (310); the housing (320) having a second optical fiber cable feedthrough (100b), according to claim 3 or 4 and/or manufactured according to claim 1 or 2, which is arranged such that the optical fiber cable section (110b) of the second optical fiber cable feedthrough (100b) is fed from the insulation volume (310) into the housing (320),
wherein the optical fiber cable section (110a) of the first optical fiber cable feedthrough (100a) and the optical fiber cable section (110b) of the second optical fiber cable feedthrough (100b) are part of one optical fiber cable (200).

8. The electrical insulator column (300) according to one of claims 6 to 7,
wherein the optical fiber cable (200) is protected by a protective layer, in particular, at least partially by a protective thermoplastic sleeve section (140a) of the first optical fiber cable feedthrough (100a), according to claim 4 and/or manufactured according to claim 2, and/or a protective thermoplastic sleeve section (140b) of the second optical fiber cable feedthrough (100b), according to claim 4 and/or manufactured according to claim 2.

9. An optical fiber high voltage link (400) for information transfer and/or energy transmission comprising an electrical insulator column (300) according to claim 6.

10. A flexible AC transmission system, FACTS, or a high voltage DC, HVDC, system comprising an optical fiber high voltage link (400) according to claim 9.

11. An optical current transducer (700), comprising
an electrical insulator column (300) according to claim 6, and
a primary optical current converter (710) connected outside the insulation volume (310) to an end of the optical fiber cable (200) adjacent to the second optical fiber cable feedthrough (100b).

12. An optical current transducer (700), comprising
an electrical insulator column (30) according to claim 7,
an aperture for receiving a current conductor, carrying a current to-be-measured, or current terminals (712) connectable to at least two current conductors, carrying the current to-be-measured, and
a primary optical current converter (710) arranged in the housing (320), connected to an end of the optical fiber cable (200), and adapted for measuring the current to-be-measured.

13. A high-voltage circuit breaker (800), comprising
an electrical insulator column (300) according to one of claims 6 to 8, and
a sensor (710) connected to an end of the optical fiber cable (200) adjacent to the second optical fiber cable feedthrough (100b).

14. A gas-insulated switchgear (GIS) compartment (900),
comprising an insulation volume (310) and a first optical fiber cable feedthrough (100a) according to claim 3 or 4 and/or manufactured according to claim 1 or 2, arranged such that the optical fiber cable section (110a) of the first optical fiber cable feedthrough (100a) is guided into the insulation volume (310).

15. The gas-insulated switchgear (GIS) compartment (900) according to claim 14,
comprising a housing (320) inside the insulation volume (310); the housing (320) having a second optical fiber cable feedthrough (100b), according to claim 3 or 4 and/or manufactured according to claim 1 or 2, which is arranged such that the optical fiber cable section (110b) of the second optical fiber cable feedthrough (100b) is fed from the insulation volume (310) into the housing (320),
wherein the optical fiber cable section (110a) of the first optical fiber cable feedthrough (100a) and the optical fiber cable section (110b) of the second optical fiber cable feedthrough (100b) are part of one optical fiber cable (200).
